# EUROPÄISCHE PATENTANMELDUNG

(11) **EP 0 985 499 A2**
(43) Veröffentlichungstag der Anmeldung: **15.03.2000**
(21) Anmeldenummer: 99117621.5
(22) Anmeldetag: 07.09.1999
(51) Int. Cl.: B25B 19/00

(54) **Vorrichtung zum Lösen von festsitzenden Schrauben und Muttern und eine dieser Vorrichtung angepasste Mutter**

(30) Priorität: 08.09.1998 DE 19840916
(71) Anmelder: Vollweiter, Adam, 74585 Rot am See (DE)
(72) Erfinder: Vollweiter, Adam, 74585 Rot am See (DE)
(74) Vertreter: Müller, Hans, Dipl.-Ing.

(57) **Zusammenfassung**

Eine Vorrichtung (10) zum Lösen von festsitzenden Schrauben und Muttern (36, 60) besitzt eine so gegen die Außenfläche (34) der Schraube oder Mutter (36, 60) zu richtende Werkzeugspitze oder Werkzeugkante, daß durch Bewegen der Werkzeugspitze oder Werkzeugkante eine Drehbewegung der Schraube oder Mutter (36, 60) herstellbar ist.

Zwischen zwei den Schraubenkopf oder die Mutter (36, 60) zwischen sich aufnehmenden Backenteilen (12, 14) dieser Vorrichtung kann eine Art Meißel (26, 70) an der Außenfläche (34) der Schraube oder Mutter (60) positioniert werden.

## Beschreibung

### TECHNISCHES GEBIET

Die Erfindung betrifft eine Vorrichtung zum Lösen von festsitzenden Schrauben und Muttern. Die Erfindung betrifft auch eine Mutter, die im festsitzenden Zustand mittels dieser Vorrichtung leicht gelöst werden kann. Derartige schwer zu lösende Schrauben und Muttern finden sich insbesondere im Fahrzeugbau, wenn defekte Teile oder Aggregate an einem Kraftfahrzeug aus dem Kraftfahrzeug entfernt werden sollen. Oftmals tritt erschwerend hinzu, daß sich solche Schrauben oder Muttern an schwer zugänglichen Stellen befinden.

### STAND DER TECHNIK

Aus der DE 42 29 248 Al ist eine Vorrichtung zum Lösen und/oder Festziehen von Schrauben und Muttern bekannt. Diese Vorrichtung besteht aus einem auf einem Schraubkopf oder auf einer Mutter aufsetzbaren Ring. Die Innenfläche dieses Ringes entspricht der Außenfläche der Mutter. Die Außenfläche des Ringes ist mit Zähnen versehen. Zum Öffnen der Mutter oder der Schraube wird ein Schlagwerkzeug etwa in tangentialer Richtung gegen die Zähne des Ringes gerichtet. Dadurch verdreht sich der Ring und damit auch die vom Ring umschlossene Mutter. Je nach Größe der Mutter sind unterschiedliche Ringe erforderlich. Die Verwendung dieser Ringe macht einen entsprechend großen seitlichen Freiraum um den Ring herum erforderlich.

Eine weitere derartige Vorrichtung ist aus der DE-PS 307 307 bekannt. Bei dieser Vorrichtung ist ebenfalls ein die Mutter oder den Schraubenkopf umfassender Ring vorhanden. Dieser Ring besitzt eine Außenverzahnung, die im kämmenden Eingriff mit einer Schneckenwelle sitzt. Die Schneckenwelle endet in einem Vierkant. Durch rotierenden Antrieb des Vierkantes kann die Schneckenwelle in Umdrehung versetzt und dadurch das Zahnrad entsprechend mitgedreht werden. Das Zahnrad verdreht dabei die von ihm umschlossene Mutter. Auch bei dieser Vorrichtung muß die die Mutter umschließende Öffnung der Größe der Mutter beziehungsweise des Schraubenkopfes angepaßt sein.

### DARSTELLUNG DER ERFINDUNG

Ausgehend von diesem Stand der Technik liegt der Erfindung die Aufgabe zugrunde, eine verbesserte Vorrichtung zum Lösen von festsitzenden Schrauben oder Muttern sowie eine der Vorrichtung besonders angepaßte, im festsitzenden Zustand leicht lösbare Mutter anzugeben.

Diese Erfindung ist für die erfindungsgemäße Vorrichtung durch die Merkmale des Anspruchs 1 und für die erfindungsgemäße Mutter durch die Merkmale des Anspruchs 14 gegeben. Die Mutter kann dabei auch ein Schraubenkopf sein, da es für die vorliegende Erfindung nur auf die Außenkontur der Mutter ankommt, und diese Außenkontur bei einer Mutter und bei einem Schraubenkopf gleich sind.

Die erfindungsgemäße Vorrichtung zeichnet sich dementsprechend dadurch aus, daß zwischen zwei den Schraubenkopf oder die Mutter zwischen sich aufnehmenden Backenteilen ein Meißel an der Außenfläche der Schraube oder Mutter positionierbar ist. Die erfindungsgemäße Vorrichtung umschließt damit nicht ringförmig die Mutter oder die Schraube, so wie dies im Stand der Technik der Fall ist. Dadurch, daß die erfindungsgemäße Vorrichtung zangenartig die Mutter oder den Schraubenkopf lediglich teilweise umfaßt, kann die Vorrichtung auch von der Seite her an der Schraube beziehungsweise der Mutter angesetzt werden. Die Kraft zum Aufdrehen der Mutter oder des Schraubenkopfes muß nicht zwingend durch Verschwenken der Backenteile beziehungsweise der Vorrichtung um die Drehachse der festsitzenden Mutter, sondern kann durch Schlageinwirkung eines Meißels gegen die Umfangsfläche der Mutter oder des Schraubenkopfes erzeugt werden. Dann braucht nur ein minimaler Freiraum um die festsitzende Mutter oder Schraube herum vorhanden zu sein, da der Freiraum nur das Ansetzen, nicht das Verschwenken der erfindungsgemäßen Vorrichtung erlauben muß.

Der Meißel kann aber auch nur dazu benutzt werden, einen besonders rutschfesten Halt der Vorrichtung an der zu lösenden Mutter sicher zu stellen. In extremen Fällen könnte mit Hilfe des Meißels auch eine nicht anders zu lösende Mutter zerstört werden.

Der Meißel kann eine Spitze oder eine Schneidkante, auch in abgestufter Form besitzen.

Die Backenteile können einteilig oder gelenkig miteinander verbunden sein. Im gelenkigen Zustand kann die Vorrichtung dann in Art einer Zange ausgebildet sein.

Zum Positionieren des Meißels an der erfindungsgemäßen Vorrichtung kann eine Längsführung beispielsweise in Art eines Kanals vorhanden sein. Längs dieses Kanals kann dann der Meißel beispielsweise angetrieben von einem Schlaghammer kraftvoll schräg gegen die Außenfläche der Mutter oder des Schraubenkopfes gerichtet werden. Um mit diesem Meißel den Schraubenkopf oder die Mutter zu drehen, ist er im möglichst großen Abstand zur Drehachse der Schraube oder der Mutter in der erfindungsgemäßen Vorrichtung positioniert.

Nach einer anderen Ausführungsform der Erfindung kann der Meißel auch nur reibschlüssig gegen die Oberfläche des Schraubenkopfes oder der Mutter gerichtet werden. Der Meißel dient dann dazu, ein gegenseitiges Verrutschen zwischen Schraubenkopf beziehungsweise Mutter und der Vorrichtung zu verhindern. Das Aufdrehen der Schraube beziehungsweise der Mutter erfolgt dann durch Verschwenken der Vorrichtung.

Ein Meißel oder ein sonstiges Werkzeug läßt sich besonders gut und rutschfest an einem Schraubenkopf oder einer Mutter ansetzen, wenn dieselbe keine glatte sondern eine mit einbeziehungsweise ausspringenden Zacken, Zähnen oder vergleichbaren Oberflächenbereichen ausgestattet ist. So kann ein entsprechender Schraubenkopf oder eine entsprechende Mutter in einem ersten Teilbereich einen an sich bekannten üblichen, beispielsweise DIN-Querschnitt, und in einem anderen Teilbereich einen ein Schneckengewinde und/oder einbeziehungsweise ausspringende Zacken oder Zähne aufweisenden Teilbereich besitzen. Eine entsprechende Mutter ist in der Zeichnung dargestellt. Bei einer derartigen Mutter beziehungsweise einem derartigen Schraubenkopf können dann auch mit einer Vorrichtung, bei der beide Backenteile biegefest miteinander verbunden sind, mit Hilfe eines in einer Längsführung an der Vorrichtung geführten Schneckengewindes, festsitzende Muttern oder Schrauben leicht gelöst werden. Dieses Schneckengewinde greift dabei in den Teilbereich ein, der nicht den vorstehend genannten DIN-Querschnitt, sondern den Querschnitt aufweist, der mit einem Schneckengewinde versehen ist.

Auch diese Vorrichtung läßt sich von der Seite her, das heißt in Längsrichtung der Schraubachse, an die festsitzende Mutter oder den festsitzenden Schraubkopf ansetzen.

Weitere Vorteile der Erfindung ergeben sich durch die in den Ansprüchen weiter aufgeführten Merkmale sowie aus den nachstehenden Ausführungsbeispielen.

### KURZE BESCHREIBUNG DER ZEICHNUNG

Die Erfindung wird im folgenden anhand der in der Zeichnung dargestellten Ausführungsbeispiele näher beschrieben und erläutert. Es zeigen:
- Fig. 1: eine an einer Mutter angesetze Vorrichtung nach der Erfindung,
- Fig. 2: die Vorrichtung gemäß Figur 1 bei einer demgegenüber kleineren Mutter,
- Fig. 3: eine Untersicht einer anderen, erfindungsgemäßen Mutter,
- Fig. 4: eine Seitenansicht der Mutter gemäß Figur 3,
- Fig. 5: eine Draufsicht auf die Mutter gemäß Figur 3,
- Fig. 6: eine zweite Ausführungsform einer erfindungsgemäßen Vorrichtung, die an einer Mutter gemäß den Figuren 3 bis 5 angesetzt ist,
- Fig. 7: eine dritte Ausführungsform einer erfindungsgemäßen Vorrichtung, die ebenfalls an einer Mutter gemäß den Figuren 3 bis 5 angesetzt ist.

### WEGE ZUM AUSFÜHREN DER ERFINDUNG

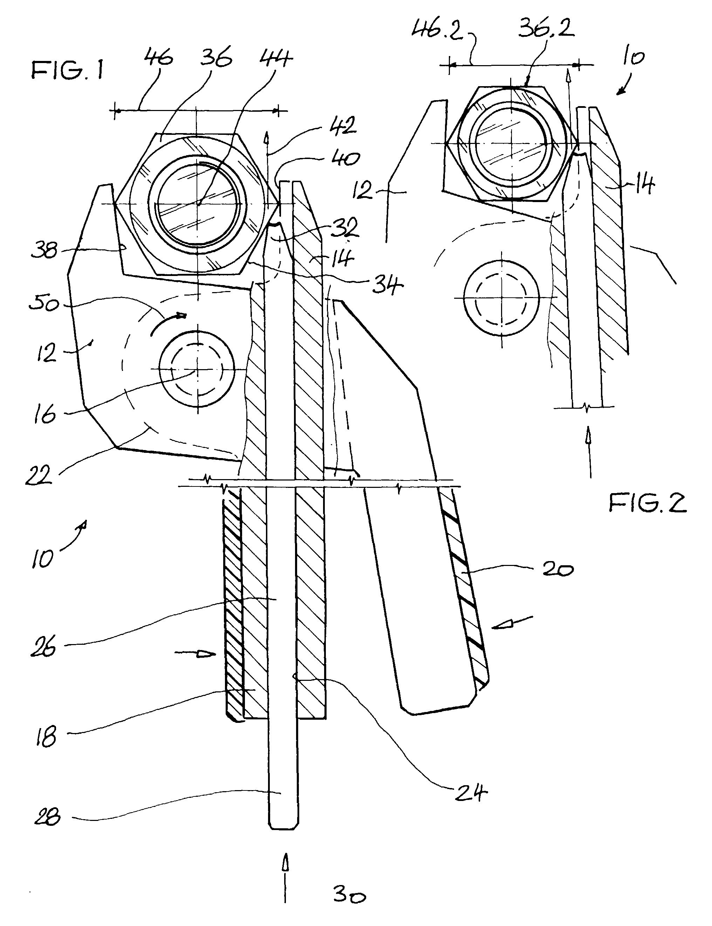

Eine in Figur 1 dargestellt zangenartige Vorrichtung 10 besitzt eine linke und rechte Backe 12, 14, die über ein gemeinsames Drehgelenk 16 mit einem linken und rechten Griffteil 18, 20 verbunden sind. Dabei ist die linke Backe 12 mit dem rechten Griffteil 20 und die rechte Backe 14 mit dem linken Griffteil 18 jeweils verbunden.

Die rechte Backe 14 besitzt einen seitlich auskragenden Vorsprung 22, mit dem sie mit dem Drehgelenk 16 verbunden ist. Im übrigen bildet die Backe 14 in etwa eine geradlinige Verlängerung des linken Griffteils 18.

Längs durch das linke Griffteil 18 und durch die rechte Backe 14 hindurch führt ein geradliniger Kanal 24. In diesem Kanal sitzt ein stabförmiger Schlagmeißel 26. Mit seinem unteren Ende 28 ragt der Schlagmeißel 26 aus dem linken Griffteil 18 nach unten heraus. Das untere Ende 28 ist querschnittsmäßig so ausgebildet, daß es in einen Schlaghammer eingesetzt werden und durch den Schlaghammer dann in Längsrichtung 30 in dem Kanal 24 verschoben werden kann.

Das obere Ende des Schlagmeißels 26 besitzt eine Spitze 32. Mit dieser Spitze 32 liegt der Schlagmeißel 26 an der Außenfläche 34 einer Mutter 36. Diese Mutter 36 ist zwischen den inneren Anlageflächen 38, 40 der linken und rechten Backe 12, 14 gehalten. Durch Schlagen gegen das untere Ende 28 des Schlagmeißels 26 in Längsrichtung 30 wird die Spitze 32 in tangentialer Richtung 42 um ihre Drehachse 44 bewegt. Die Spitze 32 gräbt sich dabei etwas in die Außenfläche 34 der Mutter 36 ein. Beim Drehen der Mutter 36 um ihre Drehachse 44 bewegen sich die beiden Backen 12, 14 etwas aufeinander zu. Der zwischen ihnen vorhandene Abstand 46 wird dadurch kleiner. Das an der linken Backe 12 befestigte rechte Griffteil 20 bewegt sich beim Schließvorgang der beiden Backen 12, 14 in Schwenkrichtung 50 und damit in Richtung auf das linke Griffteil 18. Die beiden Griffteile 18, 20 bewegen sich damit in gleicher Weise wie die beiden Backen 12, 14 beim Schließvorgang aufeinander zu.

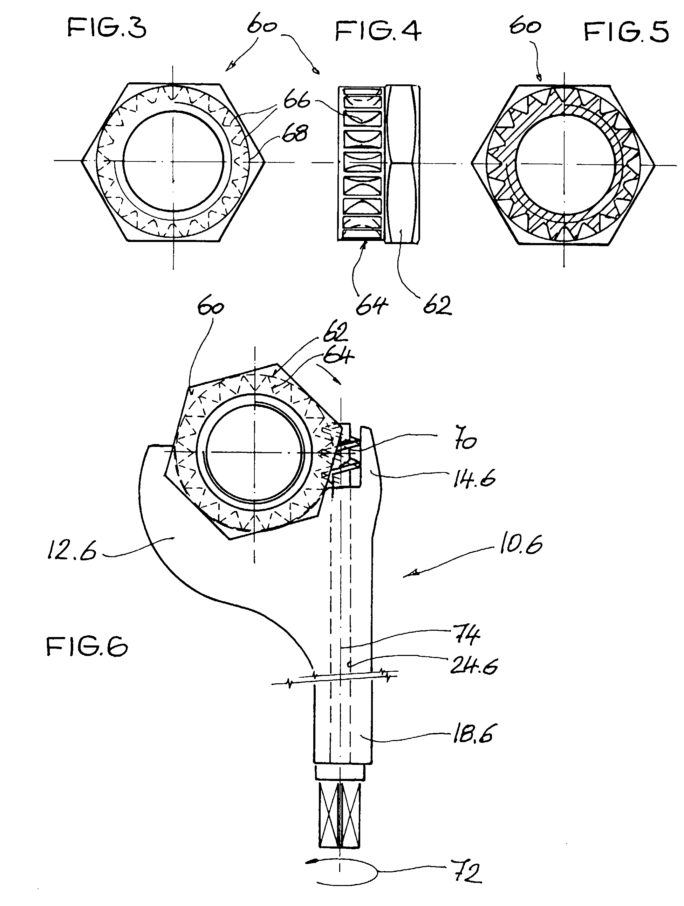

In Figur 2 umfaßt die zangenartige Vorrichtung 10 eine Mutter 36.2, die umfangsmäßig kleiner ist als die in Figur 1 dargestellte Mutter 36. Der lichte Abstand 46.2 zwischen den beiden Backen 12, 14 ist dementsprechend kleiner als der Abstand 46 gemäß Figur 1. Das bedeutet, daß auch die beiden Griffteile 18, 20 bei der in Figur 2 dargestellten Position einen engeren gegenseitigen Abstand aufweisen, als er bei der Darstellung nach Figur 1 entsprechend der dort vorhanden größeren Mutter 36 vorhanden ist.

Die zangenartige Vorrichtung 10 eignet sich auch zum Verdrehen von Rohrstücken.

Während die in Figur 1 und 2 dargestellten Muttern 36, 36.2 übliche DIN-Querschnitte aufweisen, besitzt die in den Figuren 3 bis 5 dargestellte Mutter 60 sowohl einen Abschnitt 62 mit einem üblichen DIN-Querschnitt als auch einen weiteren Abschnitt 64 mit einem anderen Querschnitt. In diesem Abschnitt 64 besitzt die Mutter 60 die Außenkontur eines Zahnrades. So sind umfänglich verteilt mehrere Zähne 66 vorhanden. Der Umkreis 68 dieser Zähne 66 bildet den Innenkreis für den sechseckigen Querschnitt des Abschnittes 62. Eine derartige Mutter 60 kann mit einem üblichen Schlüssel bewegt werden. Dazu greift dieser Maul- oder Steckschlüssel in ihren Abschnitt 62 ein. In den Abschnitt 64 kann beispielsweise die Spitze 32 vom Schlagmeißel 26 der Vorrichtung 10 angesetzt werden. Die beiden Backen 12, 14 der Vorrichtung 10 können dabei nach wie vor die Mutter 60 im Bereich ihres Abschnittes 62 umfassen.

In dem in Figur 6 dargestellten Beispielsfall für eine erfindungsgemäße Vorrichtung, greift bei der dort dargestellten Vorrichtung 10.6 nicht die Spitze eines Meißels sondern ein Schneckengewinde 70 in den Abschnitt 64 der Mutter 60. Das Schneckengewinde 70 ist an dem oberen Ende eines stabförmigen Gliedes 74 vorhanden, das in einem Kanal 24.6 drehbar gehalten ist. Der Kanal 24.6 geht geradlinig durch die Vorrichtung 10.6 hindurch und besitzt unten einen Vierkant-Querschnitt. Mit diesem Querschnitt kann er in eine Bohrmaschine eingesetzt und in Rotation (Pfeil 72) versetzt werden.

Die Vorrichtung 10.6 besitzt wiederum eine linke und rechte Backe 12.6 beziehungsweise 14.6. Beide Backen sind zu einem einteiligen Griffteil 18.6 verbunden und im Gegensatz zur Vorrichtung 10 nicht schwenkbar ausgebildet.

Statt der Zähne 66 könnten in einem Abschnitt 64 auch nur abschnittsweise Einformungen vorhanden sein. Statt des Schneckengewindes 70 könnte dann dort ebenfalls die Spitze 32 eines Schlagmeißels 26 und damit die Vorrichtung 10 besonders rutschfest angesetzt werden.

Bei der Vorrichtung 10.6 sind die beiden Backen 12.6, 14.6 im Bereich des Abschnittes 62 der Mutter 60 und das Schneckengewinde 70 und damit der Kanal 24.6 in der Ebene des Abschnittes 64 der Mutter 60 vorhanden.

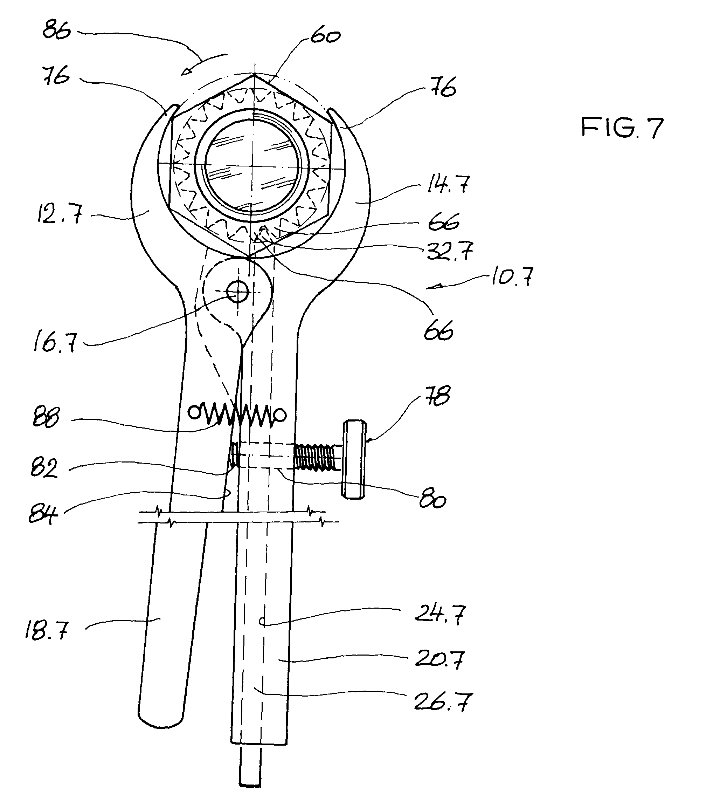

Auch die in Figur 7 dargestellte Vorrichtung 10.7 besitzt eine linke Backe 12.7 und eine rechte Backe 14.7. Beide Backen besitzen einen jeweiligen Hintergriff 76, um eine zwischen ihnen positionierte Mutter, wie beispielsweise eine Mutter 60, ausreichend zu hintergreifen, so wie das in Figur 7 dargestellt ist. Im vorliegenden Fall ist die linke Backe 12.7 mit einem linken Griffteil 18.7 und die rechte Backe 14.7 mit einem rechten Griffteil 20.7 über ein gemeinsames Drehgelenk 16.7 verbunden.

Zwischen den beiden Griffteilen 18.7, 20.7 ist eine Spreizschraube 78 verstellbar positioniert. Durch mehr oder weniger weites Einschrauben dieser Schraube 78 in eine mit einem Gewinde versehene Öffnung 80 kann der gegenseitige Abstand der beiden Griffteile 18.7, 20.7 variabel eingestellt werden. Dazu drückt die Stirnfläche 82 der Schraube 78 gegen die Innenfläche 84 des linken Griffteils 18.7.

In dem rechten Griffteil 20.7 ist wiederum ein geradliniger Kanal 24.7 vorhanden, in dem ein Schlagmeißel 26.7 längsverschieblich geführt ist. Die Spitze 32.7 des Schlagmeißels 26.7 greift zwischen benachbarte Zähne 66 der Mutter 60. Der Meißel 26.7 kann in seiner in Figur 7 dargestellte Position in Bezug auf die Griffteile 18.7, 20.7 lagefixiert werden.

Beim Verschwenken der Vorrichtung 10.7 beispielsweise im Gegenuhrzeigersinn 86, was durch Umgreifen und Verschwenken der beiden Griffteile 18.7, 20.7 bewirkt wird, behalten die beiden Griffteile 18.7, 20.7 ihre in Figur 7 dargestellte gegenseitige Schwenkstellung. Damit behalten auch die beiden Backen 12.7, 14.7 ihre in Figur 7 dargestellte gegenseitige Ausrichtung, in der sie die Mutter 60 umfassen. Beim Verschwenken der Vorrichtung 10.7 wird auch der Meißel 26.7 mit verschwenkt. Dabei bewegt die zwischen den Zähnen 66 der Mutter 60 einsitzende Spitze 32.7 des Meißels 26.7 die Mutter 60 im Gegenuhrzeigersinn mit. Damit läßt sich die Mutter 60 beispielsweise aus ihrem festsitzenden Sitz lösen.

Eine zwischen den beiden Griffteilen 18.7, 20.7 befestigte Schraubenfeder 88 hält das linke Griffteil 18.7 an der Stirnfläche 82 der Spreizschraube 78.

Auch bei dieser Vorrichtung 10.7 könnte statt der Mutter 60 eine übliche, beispielsweise DIN-Mutter verdreht werden. Dazu ist nur erforderlich, daß der Meißel 26.7 rutschfest an der Außenfläche einer Mutter oder eines Schraubenkopfes angelegt wird. Umfangsmäßig heraus oder hinein springende Wandbereiche auf der Außenfläche der Mutter oder des Schraubenkopfes erleichtern diesen erforderlichen rutschfesten Sitz der beispielsweise Meißelspitze an der Außenfläche der zu lösenden Mutter oder Schraube.

Neben dem Aufdrehen könnte die erfindungsgemäße Vorrichtung auch zum Zudrehen von Schrauben, Muttern, Rohrstücken und dergleichen Teile verwendet werden.

## Patentansprüche

1. Vorrichtung (10) zum Lösen von festsitzenden Schrauben und Muttern (36, 60),
- mit einer so gegen die Außenfläche (34) der Schraube oder Mutter (36, 60) zu richtenden Werkzeugspitze oder Werkzeugkante, daß durch Bewegen der Werkzeugspitze oder Werkzeugkante eine Drehbewegung der Schraube oder Mutter (36, 60) herstellbar ist,
**dadurch gekennzeichnet, daß**
- zwischen zwei den Schraubenkopf oder die Mutter (36, 60) zwischen sich aufnehmenden Backenteilen (12, 14) eine Art Meißel (26, 70) an der Außenfläche (34) der Schraube oder Mutter (60) positionierbar ist.

2. Vorrichtung nach Anspruch 1,
**dadurch gekennzeichnet, daß**
- der Meißel eine Spitze (32) oder eine Schneidkante (70) besitzt.

3. Vorrichtung nach Anspruch 2,
**dadurch gekennzeichnet, daß**
- an einem Meißel abgestufte Spitzen oder Schneidkanten vorhanden sind.

4. Vorrichtung nach einem der vorstehenden Ansprüche,
**dadurch gekennzeichnet, daß**
- die Backenteile (12, 14) als gelenkig (16) miteinander verbundene Zangenbacken ausgebildet sind.

5. Vorrichtung nach Anspruch 4,
**dadurch gekennzeichnet, daß**
- eine Längsführung (24) für einen verstellbaren Meißel (26) vorhanden ist.

6. Vorrichtung nach Anspruch 5,
**dadurch gekennzeichnet, daß**
- ein Kanal (24) in einer Zangenbacke (14) vorhanden ist,
- der Meißel (26) längs des Kanals (24) verschiebbar verstellbar ist.

7. Vorrichtung nach Anspruch 5 oder 6,
**dadurch gekennzeichnet, daß**
- der Meißel (26) zwischen den Zangenbacken (12, 14) so vorhanden ist, daß seine Längsachse im Abstand zur Drehachse (44) der Schraube oder Mutter (36, 60) positionierbar ist.

8. Vorrichtung nach einem der Ansprüche 5 bis 7,
**dadurch gekennzeichnet, daß**
- der Schaft (28) des Meißels (26) in einen Schlaghammer einspannbar ist.

9. Vorrichtung nach einem der vorstehenden Ansprüche,
**dadurch gekennzeichnet, daß**
- die beiden Backenteile (12, 14) so mit zwei Griffteilen (18, 20) verbunden sind, daß
- beim Zubewegen der beiden Backenteile (12, 14) sich die beiden Griffteile (18, 20) ebenfalls zubewegen.

10. Vorrichtung nach Anspruch 9,
**dadurch gekennzeichnet, daß**
- das eine Backenteil als im wesentlichen geradlinige Verlängerung des einen Griffteils vorhanden ist,
- das andere Backenteil abgewinkelt am anderen Griffteil vorhanden ist.

11. Vorrichtung nach einem der Ansprüche 1 bis 6,
**dadurch gekennzeichnet, daß**
- die Backenteile (12, 14) mit einem Hintergriff (76) so ausgebildet sind, daß durch sie eine Schraube oder Mutter (60) zu mehr als 180 Grad umfaßbar ist.

12. Vorrichtung nach Anspruch 11,
**dadurch gekennzeichnet, daß**
- die Werkzeugspitze (32) oder Werkzeugschneide relativ zu den Backenteilen (12, 14) unverrückbar lagefixierbar ist.

13. Vorrichtung nach Anspruch 1,
**dadurch gekennzeichnet, daß**
- die beiden Backenteile (12, 14) biegefest miteinander verbunden sind,
- eine Längsführung (24) für ein ein Schneckengewinde (70) aufweisendes Drehteil vorhanden ist,
- die Schraube oder Mutter (60) einen Oberflächenbereich (62) mit zahnartigen Vorsprüngen (66) besitzt, welche mit dem Schneckengewinde (70) des Drehteils in drehfesten Eingriff bringbar sind.

14. Schraubenkopf oder Mutter mit einem DIN-Querschnitt,
**dadurch gekennzeichnet, daß**
- ein Teilbereich
-- einen Querschnitt mit einem Schneckengewinde und/oder
-- einen Querschnitt mit ein- beziehungsweise
ausspringenden Zacken oder Zähnen besitzt.
